# EUROPEAN PATENT SPECIFICATION

(11) **EP 3 369 462 B1**
(45) Date of publication and mention of the grant of the patent: **10.04.2024**
(21) Application number: 17159071.4
(22) Date of filing: 03.03.2017
(51) Int. Cl.: A63B 21/00, A47K 10/02

(54) **SPORTING TOWEL MAT HAVING CONTINUOUS ANTI-SLIP STRIP BACKGROUND**
SPORTHANDTUCHMATTE MIT RÜCKSEITIGEM STREIFEN MIT KONTINUIERLICHER ANTIRUTSCHWIRKUNG
SERVIETTE DE TAPIS SPORTIF COMPORTANT UNE PARTIE ARRIÈRE À BANDE ANTIDÉRAPANTE CONTINUE

(43) Date of publication of application: 05.09.2018
(73) Proprietor: GROUNDING INC., Tortola (VG)
(72) Inventor: Tsai, Victor, TAIPEI CITY (TW)
(74) Representative: Straus, Alexander

(56) References cited:
- EP-A1- 2 808 061
- WO-A1-2013/163669
- US-A1- 2005 003 173

## Description

### BACKGROUND

### 1. Technical Field

The present disclosure relates to a sporting towel mat, and particularly, to a sporting towel mat having a continuous anti-slip strip.

### 2. Description of Related Art

A conventional sporting towel mat, such as a double-sided anti-slip towel mat disclosed in Taiwan Patent Pub. No. 201442676, includes a fabric layer and two anti-slip layers respectively attached on two sides of the fabric layer in a way that the two sides of the fabric layer are partially exposed. By means of the anti-slip layers and the exposed parts of the fabric layer, the conventional sporting towel mat has an anti-slip effect on the user's skin no matter there is sweat on the skin or not, that hereinafter called dry and wet anti-slip effect. It is well-known that when there is sweat on the human skin, such as the skin of the palm, the fabric surface has the anti-slip effect on the skin, but the anti-slip layer doesn't; in contrast, when there is no sweat on the skin, the anti-slip layer has the anti-slip effect on the skin, but the fabric surface doesn't. Therefore, the aforesaid conventional sporting towel mat has the dry and wet anti-slip effect. Besides, when the towel mat is in use, the top surface of the towel mat performs the anti-slip effect to the user contacting the top surface, and the bottom surface of the towel mat also performs the anti-slip effect to the ground or another mat under the towel mat by means of the anti-slip layer. EP2808061 A1 discloses a double-sided anti-slip towel mat including a fabric layer, a first anti-slip layer in a predetermined pattern and bonded to the top face of the fabric layer and defining therein a plurality of first openings through which a part of the top face of the fabric layer is exposed to the outside, and a second anti-slip layer in a predetermined pattern and bonded to the bottom face of the fabric layer and defining a plurality of second openings through which a part of the top face of the fabric layer is exposed to the outside.

In another conventional towel mat, such as that disclosed in U.S. Patent Pub. No. 2005/0003173, a plurality of discrete anti-slip projections are disposed on one side or two sides of a fabric layer, so that the towel mat has the dry and wet anti-slip effect. However, because of the discrete anti-slip projections, the user when touching the surface of the towel mat may feel the surface is uneven, thereby feeling uncomfortable in sense of touch. In addition, because the anti-slip projections are arranged discretely, a large portion of the fabric layer is exposed to the outside, resulting in an insufficient anti-slip effect on the skin without sweat. When the towel mat is used in a way that the surface with the anti-slip projections faces downward to the ground, the user can't be sure whether there is the anti-slip projection at the part of the towel mat pressed by the palm or other parts of the body of the user; if there is not, the towel mat might be slipped and cause sport injuries to the user.

### SUMMARY

A primary objective of the present disclosure is to provide a sporting towel mat having a continuous anti-slip strip to improve comfort in sense of touch.

Another objective of the present disclosure is to provide a sporting towel mat having a continuous anti-slip strip, wherein the anti-slip strip has an uneven surface, resulting in a relatively larger area of the anti-slip surface and a stereoscopic structure, so as to improve the anti-slip effect.

A further objective of the present disclosure is to provide a sporting towel mat having a continuous anti-slip strip, and at least partial sections certainly including parts of both the anti-slip strip and a fabric towel, so that the sporting towel mat in use is ensured a great anti-slip effect.

According to the above-noted objectives, the present disclosure provides a sporting towel mat which includes a fabric towel having a first surface and a second surface, and an anti-slip strip having a predetermined width and attached on the first surface of the fabric towel to form a predetermined pattern which covers the first surface of the fabric towel incompletely, so that the first surface of the fabric towel has at least one exposed part which is not covered by the anti-slip strip. The anti-slip strip is shaped in a continuous form, and has two side parts and a middle part located between the two side parts and lower than the two side parts on a surface of the anti-slip strip.

Because the anti-slip strip is shaped in the continuous form, the sporting towel mat of the present disclosure is improved in comfort of sense of touch. Besides, the uneven surface of the anti-slip strip results in a relatively larger area of the anti-slip surface and a stereoscopic structure, so as to improve the anti-slip effect.

### BRIEF DESCRIPTION OF THE DRAWINGS

Fig. 1 is a top view of a first preferred embodiment of the present invention.
Fig. 2 is a schematic sectional view of a part of the first preferred embodiment of the present invention, illustrating an anti-slip strip attached on a fabric towel.
Fig. 3 is a top view of a second preferred embodiment of the present invention.
Fig. 4 is a partially cut-away perspective view of the second preferred embodiment of the present invention, illustrating an anti-slip strip attached on a fabric towel.
Fig. 5 is a schematic sectional view of a part of the second preferred embodiment of the present invention, illustrating the anti-slip strip attached on the fabric towel.
Fig. 6 is a top view of a solution not claimed by the present invention, but given as a further example for illustration only.
Fig. 7 is a top view of another embodiment of the present invention, illustrating another arrangement of the anti-slip strip.

### DESCRIPTION OF THE EXEMPLARY EMBODIMENTS

The technical features of the present invention will be fully understood from the detailed description of preferred embodiments given herein below and the accompanying drawings.

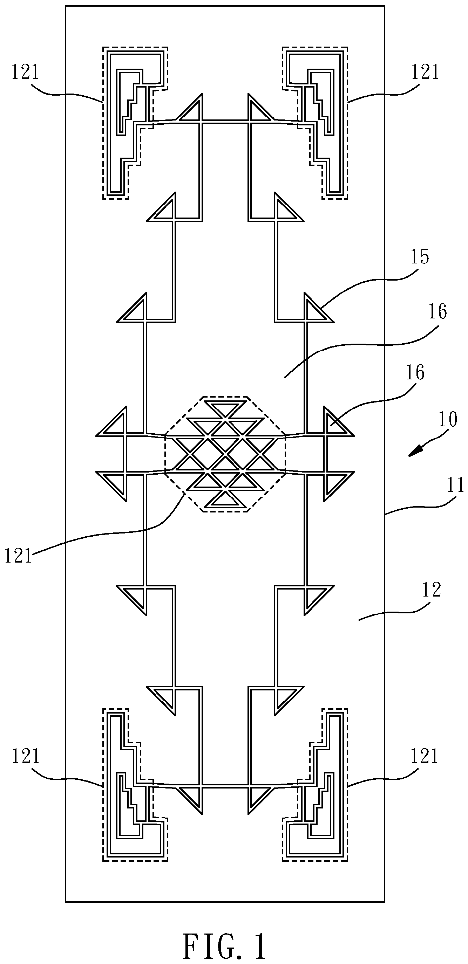

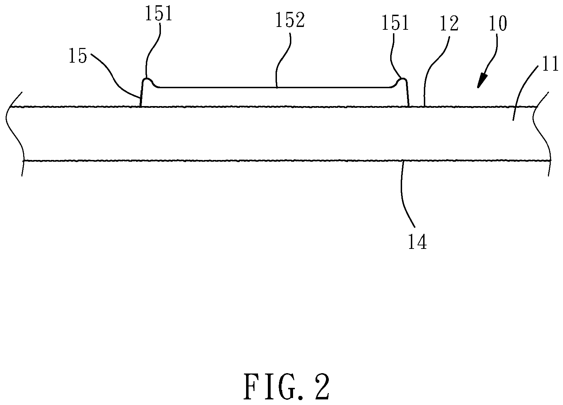

Referring to Figs. 1 and 2, a sporting towel mat 10 according to a first preferred embodiment of the present invention includes a fabric towel 11 and an anti-slip strip 15.

The fabric towel 11 has a first surface 12 and a second surface 14.

The anti-slip strip 15 has a predetermined width and is attached on the first surface 12 of the fabric towel 11 to form a predetermined pattern which covers the first surface 12 of the fabric towel 11 incompletely, so that the first surface 12 of the fabric towel 11 has at least one exposed part 16 which is not covered by the anti-slip strip 15.

The anti-slip strip 15 is shaped in a continuous form, and has two side parts 151 and a middle part 152 located between the two side parts 151 and lower than the two side parts 151 on a surface of the anti-slip strip. In the first preferred embodiment, the middle part 152 of the anti-slip strip 15 has a thickness no more than 1 mm. For a towel mat, if the thickness of the anti-slip strip 15 is larger than 1 mm, the user is liable to feel the projection of the anti-slip strip 15 on the surface of the towel mat obviously, thereby feeling uncomfortable while using the towel mat. In practice, the thickness of the middle part 152 of the anti-slip strip 15 is optimal in the range from 0.2 mm to 0.3 mm, so that the anti-slip strip 15 with the preferred thickness has a nice flexibility and does not impact the bending, stacking and receiving of the towel mat. In addition, in the first embodiment, the primary constituent of the anti-slip strip is silicone rubber, but it is just an example, the present invention is not limited thereto. Alternatively, other conventional materials suitable for the anti-slip strip can be used to form the anti-slip strip 15 of the present invention.

The first surface 12 of the fabric towel 11 may be defined with a plurality of partial sections 121. The partial sections 121 can be arranged at the locations on the fabric towel 11, where the user's palms or foot soles will often touch while the user uses the towel mat, thereby achieving the dry and wet anti-slip effect.

In the first embodiment, the anti-slip strip 15 is interlaced to form a plurality of intersections, resulting in a plurality of exposed parts 16. In the first embodiment, except for the intersections, the other parts of the anti-slip strip 15 have the same width.

The main structure of the first embodiment is described in the above content, and the usage status of the first embodiment will be illustrated below.

Before in use, the sporting towel mat 10 of the present invention can be laid on a soft mat (not shown) in a way that the first surface 12 faces upwardly.

As shown in Figs. 1 and 2, the user can do exercise, such as yoga, on the sporting towel mat 10 of the present invention. During the exercise, the palms or foot soles of the user often press on the first surface 12, especially the partial sections 121, and any area equal to the area of the human palm excluding all fingers in each partial section 121 certainly includes a portion of the exposed parts 16 and a portion of the anti-slip strip 15, so the arrangement of the anti-slip strip 15 provides the sporting towel mat 10 with the dry and wet anti-slip effect. Therefore, the user can feel relieved when doing exercise on the sporting towel mat 10 of the present invention without worrying that the palm or foot sole may slip, so that the sporting towel mat 10 is ensured a great anti-slip effect. In addition, the anti-slip strip 15 having the side parts 151 higher than the middle part results in a relatively larger area of the anti-slip surface and a stereoscopic structure of the anti-slip strip 15, that increases the contact area between the user's skin and the towel mat 10, so as to improve the anti-slip effect.

Even if the sporting towel mat 10 is used in a way that the first surface 12 faces downward to the ground and the user is in contact with the second surface 14, the aforesaid arrangement of the anti-slip strip 15 ensures the anti-slip strip 15 to be partially pressed by the user's palm or foot sole pressing on the second surface 14, resulting in anti-slip effect on another mat disposed under the sporting towel mat 10.

Because the anti-slip strip 15 of the present invention is shaped in a continuous form, the user does not feel the uncomfortableness caused by pressing multiple protrusions. Therefore, the towel mat of the present invention is more comfortable in sense of touch than the conventional towel mats.

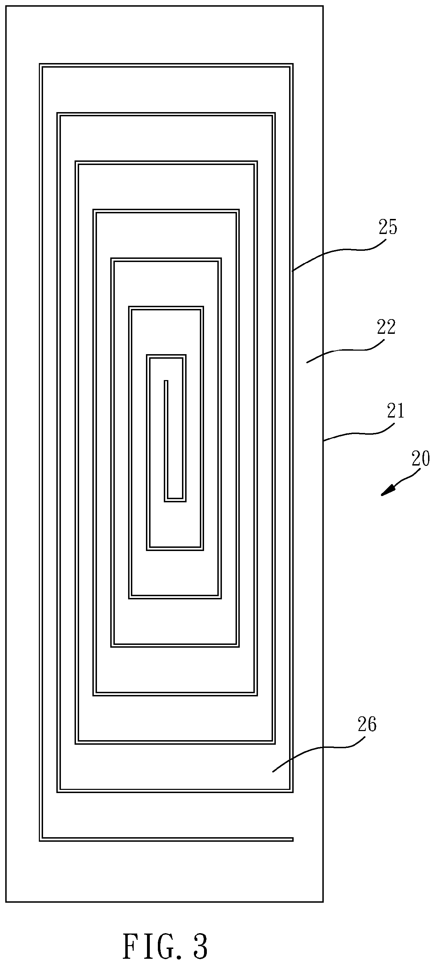

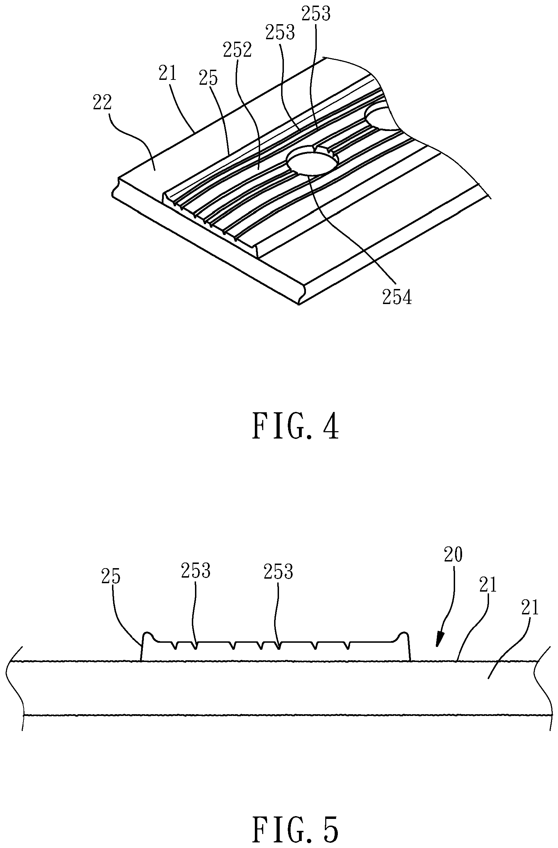

Referring to Figs. 3-5, a sporting towel mat 20 having a continuous anti-slip strip 25 according to a second preferred embodiment of the present invention is similar to the sporting towel mat 10 of the first preferred embodiment, but differs from the sporting towel mat 10 in that described below.

The middle part 252 of the anti-slip strip 25 has a plurality of concave lines 253, so that the middle part 252 of the anti-slip strip 25 is uneven on the surface. The concave lines 253 can be shaped in various forms. For example, the concave lines 253 can be extended substantially along the extension direction of the anti-slip strip 25, extended perpendicularly to the extension direction of the anti-slip strip 25 in a multiple-section form, or arranged irregularly. As an example, the concave lines 253 are extended substantially along the extension direction of the anti-slip strip 25 in the second embodiment. The concave lines 253 increase the area of the surface of the anti-slip strip 25, thereby providing the sporting towel mat 20 with a relatively better anti-slip effect. Moreover, because the concave lines 253 are extended along the extension direction of the anti-slip strip 25, when the user's sweat is attached on the surface of the anti-slip strip 25, the concave lines can perform the capillary action so that the sweat can be transferred and dispersed along the concave lines 253, thereby evaporated quickly. In other words, the concave lines can make the wet surface of the anti-slip strip 25 dry faster and further improving the anti-slip effect.

In addition, in the second preferred embodiment, the middle part 252 of the anti-slip strip 25 further has a plurality of openings 254, and parts of the fabric towel 21 are exposed via the openings 254. In this way, when the user's sweat falls on the anti-slip strip 25, the sweat located at the openings 254 can be absorbed by the fabric towel 21, so that the sporting towel mat 20 can remove sweat quickly.

In addition, the anti-slip strip 25 can also include thermochromic material (not shown). The thermochromic material is a well-known material, and it is difficult to show the thermochromic material included in the anti-slip strip 25 by drawing, so the thermochromic material is unshown in the figures. When the user touches the anti-slip strip 25, the temperature of the anti-slip strip 25 is increased because of the user's body temperature, and the thermochromic material included in the anti-slip strip 25 changes color according to the temperature variation, resulting in more interest to the towel mat in the sense of sight.

It should be noted that the middle part 252 of the anti-slip strip 25 can just has irregular unevenness on the surface, instead of the aforesaid concave lines extended along the extension direction of the anti-slip strip 25, and also have a relatively larger area of the anti-slip surface and irregular pattern.

As shown in Fig. 3, the anti-slip strip 25 in the second preferred embodiment is a single strip without any intersection, resulting in only one exposed part 26. The exposed part 26 and the anti-slip strip 25 are both certainly included in any area equal to the area of the human palm excluding all fingers on the first surface 22 of the fabric towel 21. Therefore, no matter where the user's palm or foot sole touch on the first surface 22, the sporting towel mat 20 of the present invention can provide the dry and wet anti-slip effect.

Other structures and effects of the second referred embodiment are the same with that of the first preferred embodiment, so their detailed description is omitted.

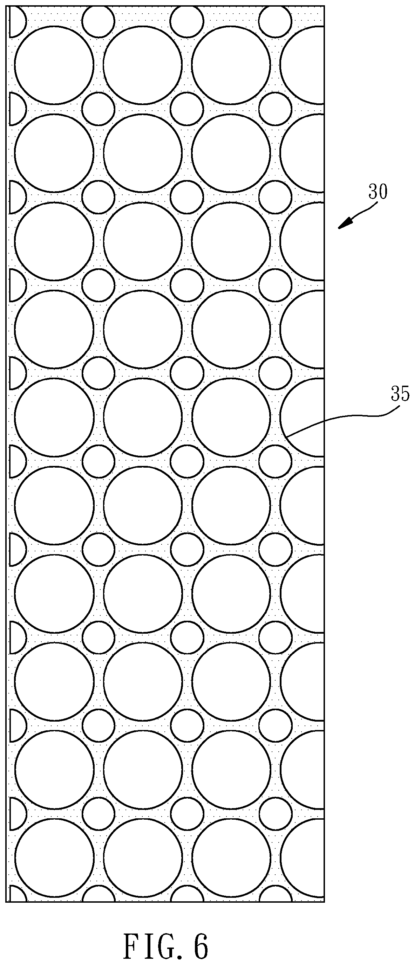

Referring to Fig. 6, a sporting towel mat 30 having an anti-slip strip 35 not claimed by the present invention is similar to the sporting towel mat 10 of the first preferred embodiment, but differs from the sporting towel mat 10 in that described below.

### The anti-slip strip 35 has multiple widths.

The anti-slip strip 35 with multiple widths can form various patterns to provide various visual effects, thereby increasing the user's purchase intention.

Other structures and effects of the additionally provided example of Fig. 6 are the same as that of the first preferred embodiment.

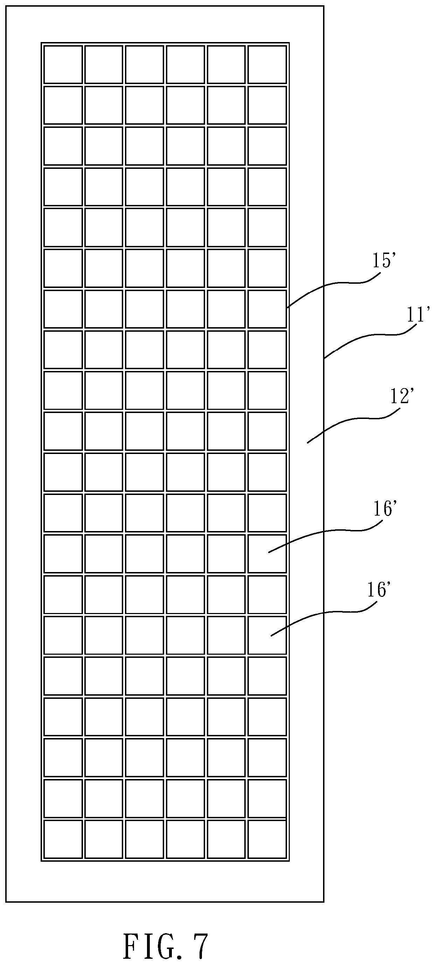

It should be complementarily explained that, apart from the types of the anti-slip strip disclosed in the aforesaid embodiments, the anti-slip strip 15' (as shown in Fig. 7) can be interlaced to form a plurality of intersections and fully distributed on the first surface 12' of the fabric towel 11' in a way that the at least one exposed part 16' and the anti-slip strip 15' are both included in any area equal to the area of the human palm excluding all fingers on the first surface 12' of the fabric towel 11'.

## Claims

1. A sporting towel mat (10)(20)(30) comprising:
a fabric towel (11)(21)(11') having a first surface (12)(22)(12') and a second surface (14); and
one single anti-slip strip (15)(25)(15') having a predetermined width and attached on the first surface (12)(22)(12') of the fabric towel (11)(21)(11') to form a predetermined pattern which covers the first surface (12)(22)(12') of the fabric towel (11)(21)(11') incompletely, so that the first surface (12)(22)(12') of the fabric towel (11)(21)(11') has at least one exposed part (16)(26)(16') which is not covered by the anti-slip strip (15)(25)(15');
the sporting towel mat (10)(20)(30) being **characterized in that**:
the anti-slip strip (15)(25)(15') is shaped in a continuous form, and has two side parts (151) and a middle part (152)(252) located between the two side parts (151) and lower than the two side parts (151) on a surface of the anti-slip strip (15)(25)(15').

2. The sporting towel mat according to claim 1, wherein the middle part (252) of the anti-slip strip (25) is uneven on the surface.

3. The sporting towel mat according to claim 2, wherein the middle part (252) of the anti-slip strip (25) has a plurality of concave grooves (253).

4. The sporting towel mat according to claim 1, wherein the middle part (152)(252) of the anti-slip strip (15)(25)(15') has a thickness no more than 1 mm.

5. The sporting towel mat according to claim 1, wherein the at least one exposed part (26) and the anti-slip strip (25) are both partially included in any area equal to the predetermined area size on the first surface (22) of the fabric towel (21).

6. The sporting towel mat according to claim 1, wherein a primary constituent of the anti-slip strip (15)(25)(15') is silicone rubber.

7. The sporting towel mat according to claim 1, wherein the anti-slip strip (25) is a single strip without any intersection.

8. The sporting towel mat according to claim 1, wherein the anti-slip strip (15)(15') is interlaced to form a plurality of intersections.

9. The sporting towel mat according to claim 1, wherein the anti-slip strip (15)(25)is uniform in width.

10. The sporting towel mat according to claim 1, wherein the anti-slip strip (15') has multiple widths.

11. The sporting towel mat according to claim 1, wherein the middle part (252) of the anti-slip strip (25) has a plurality of openings, and parts of the fabric towel (21) are exposed via the openings.

12. The sporting towel mat according to claim 1, wherein the anti-slip strip (25) comprises a thermochromic material, thereby changing color according to temperature variation.

## Patentansprüche

1. Sporthandtuchmatte (10)(20)(30), welche umfasst:
ein Stoffhandtuch (11)(21)(11') mit einer ersten Oberfläche (12)(22)(12') und einer zweiten Oberfläche (14); und
einen einzelnen Antirutschstreifen (15)(25)(15') mit einer bestimmten Breite, der auf der ersten Oberfläche (12)(22)(12') des Stoffhandtuchs (11)(21)(11') angebracht ist, um ein bestimmtes Muster auszubilden, das die erste Oberfläche (12)(22)(12') des Stoffhandtuchs (11)(21)(11') unvollständig bedeckt, so dass die erste Oberfläche (12)(22)(12') des Stoffhandtuchs (11)(21)(11') mindestens einen freiliegenden Teil (16)(26)(16') aufweist, der nicht von dem Antirutschstreifen (15)(25)(15') bedeckt ist; und
die Sporthandtuchmatte (10)(20)(30) **dadurch gekennzeichnet ist, dass**:
der Antirutschstreifen (15)(25)(15') in einer kontinuierlichen Form geformt ist und zwei Seitenteile (151) und einen Mittelteil (152)(252) aufweist, der zwischen den beiden Seitenteilen (151) und niedriger als die beiden Seitenteile (151) auf einer Oberfläche des Antirutschstreifens (15)(25)(15') angeordnet ist.

2. Sporthandtuchmatte nach Anspruch 1, worin der mittlere Teil (252) des Antirutschstreifens (25) an der Oberfläche uneben ist.

3. Sporthandtuchmatte nach Anspruch 2, worin der mittlere Teil (252) des Antirutschstreifens (25) mehrere konkave Rillen (253) aufweist.

4. Sporthandtuchmatte nach Anspruch 1, worin der mittlere Teil (152)(252) des Antirutschstreifens (15)(25)(15') eine Dicke von nicht mehr als 1 mm aufweist.

5. Sporthandtuchmatte nach Anspruch 1, worin der mindestens eine freiliegende Teil (26) und der Antirutschstreifen (25) beide teilweise in einem Bereich enthalten sind, der der bestimmten Flächengröße auf der ersten Oberfläche (22) des Stoffhandtuchs (21) entspricht.

6. Sporthandtuchmatte nach Anspruch 1, worin ein Hauptbestandteil des Antirutschstreifens (15)(25)(15') Silikonkautschuk ist.

7. Sporthandtuchmatte nach Anspruch 1, worin der Antirutschstreifen (25) ein einzelner Streifen ohne Kreuzung ist.

8. Sporthandtuchmatte nach Anspruch 1, worin der Antirutschstreifen (15)(15') zur Bildung mehrerer Kreuzungen verflochten ist.

9. Sporthandtuchmatte nach Anspruch 1, bei der der Antirutschstreifen (15)(25) eine einheitliche Breite aufweist.

10. Sporthandtuchmatte nach Anspruch 1, worin der Anti-Rutsch-Streifen (15') mehrere Breiten aufweist.

11. Sporthandtuchmatte nach Anspruch 1, worin der mittlere Teil (252) des Antirutschstreifens (25) mehrere Öffnungen aufweist und Teile des Stoffhandtuchs (21) durch die Öffnungen freigelegt werden.

12. Sporthandtuchmatte nach Anspruch 1, worin der Antirutschstreifen (25) ein thermochromes Material umfasst, wodurch dieser seine Farbe je nach Temperaturänderung ändert.

## Revendications

1. Tapis de sport (10)(20)(30) comprenant:
une serviette en tissu (11)(21)(11') ayant une première surface (12)(22)(12') et une seconde surface (14); et
une seule bande antidérapante (15)(25)(15') ayant une largeur prédéterminée et fixée sur la première surface (12)(22)(12') de la serviette en tissu (11)(21)(11') pour former un motif prédéterminé qui couvre la première surface (12)(22)(12') de la serviette en tissu (11)(21)(11') de manière incomplète, de sorte que la première surface (12)(22)(12') de la serviette en tissu (11)(21)(11') présente au moins une partie exposée (16)(26)(16') qui n'est pas recouverte par la bande antidérapante (15)(25)(15');
le tapis de sport (10)(20)(30) **caractérisé en ce que**:
la bande antidérapante (15)(25)(15') a une forme continue et comporte deux parties latérales (151) et une partie centrale (152)(252) située entre les deux parties latérales (151) et plus bas que les deux parties latérales (151) sur une surface de la bande antidérapante (15)(25)(15').

2. Tapis de sport selon la revendication 1, dans lequel la partie centrale (252) de la bande antidérapante (25) est irrégulière sur la surface.

3. Tapis de sport selon la revendication 2, dans lequel la partie centrale (252) de la bande antidérapante (25) présente une pluralité de rainures concaves (253).

4. Tapis de sport selon la revendication 1, dans lequel la partie centrale (152)(252) de la bande antidérapante (15)(25)(15') a une épaisseur inférieure ou égale à 1 mm.

5. Tapis de sport selon la revendication 1, dans lequel l'au moins une partie exposée (26) et la bande antidérapante (25) sont toutes deux partiellement incluses dans une zone égale à la taille de la zone prédéterminée sur la première surface (22) de la serviette en tissu (21).

6. Tapis de sport selon la revendication 1, dans lequel un composant principal de la bande antidérapante (15)(25)(15') est le caoutchouc de silicone.

7. Tapis de sport selon la revendication 1, dans lequel la bande antidérapante (25) est une bande unique sans intersection.

8. Tapis de sport selon la revendication 1, dans lequel la bande antidérapante (15)(15') est entrelacée pour former une pluralité d'intersections.

9. Tapis de sport selon la revendication 1, dans lequel la bande antidérapante (15)(25) est de largeur uniforme.

10. Tapis de sport selon la revendication 1, dans lequel la bande antidérapante (15') a plusieurs largeurs.

11. Tapis de sport selon la revendication 1, dans lequel la partie centrale (252) de la bande antidérapante (25) comporte plusieurs ouvertures, et des parties de la serviette en tissu (21) sont exposées par les ouvertures.

12. Tapis de sport selon la revendication 1, dans lequel la bande antidérapante (25) comprend un matériau thermochromique, changeant ainsi de couleur en fonction de la variation de température.
